# EUROPEAN PATENT SPECIFICATION

(11) **EP 4 113 087 B1**
(45) Date of publication and mention of the grant of the patent: **16.10.2024**
(21) Application number: 21761057.5
(22) Date of filing: 16.02.2021
(51) Int. Cl.: G01L 9/00, G01L 9/04

(54) **PRESSURE SENSOR**
DRUCKSENSOR
CAPTEUR DE PRESSION

(30) Priority: 25.02.2020 JP 2020029308
(43) Date of publication of application: 04.01.2023
(73) Proprietor: TDK Corporation, Tokyo 103-6128 (JP)
(72) Inventor: KOBAYASHI, Masanori, Tokyo 103-6128 (JP); UNNO, Ken, Tokyo 103-6128 (JP); SASAHARA, Tetsuya, Tokyo 103-6128 (JP); NAWAOKA, Kohei, Tokyo 103-6128 (JP)
(74) Representative: Epping - Hermann - Fischer
(86) International application number: PCT/JP2021/005734
(87) International publication number: WO 2021/172103

(56) References cited:
- EP-A2- 0 590 292
- WO-A1-2011/010571
- JP-A- 2015 068 704
- JP-A- 2015 130 520
- JP-A- 2016 208 067
- US-A- 4 419 598
- US-A1- 2016 233 797
- US-A1- 2020 013 946

## Description

### Technical Field

The present invention relates to a pressure sensor that detects strain due to a deformation of a membrane by resistance change.

### Background

A pressure sensor is known that detects a distortion of a membrane (also referred to as a diaphragm) by resistance change using a piezoresistive effect. In such a pressure sensor, the distortion due to the deformation of the membrane is detected by a resistance change of a resistor provided on the membrane.

In recent years, there has been a demand for low power consumption of a pressure sensor. For example, a technique is proposed in which electric power is intermittently supplied to a bridge circuit included in a pressure sensor by pulse driving (see Patent Document 1).

However, the pressure sensor that intermittently supplies electric power has a problem with inability to detect a momentary pressure abnormality generated at the timing when the electric power supply is turned off.

### Prior Arts

### Patent Document

Patent Document 1: EP0590292 A2

### Summary of Invention

### Problems to be solved by Invention

The present invention provides a pressure sensor capable of reducing electric power consumption and preventing detection omission of pressure change.

### Means for solving the Problem

To achieve the above object, a pressure sensor according to the present invention comprises:
a membrane generating a deformation in response to pressure;
a pressure detection circuit including at least four resistors arranged on the membrane and detecting the deformation of the membrane with a bridge circuit formed by the resistors;
a piezoelectric body disposed on the membrane and detecting the deformation of the membrane; and
a changeover unit switching electric power supply to the pressure detection circuit based on a detection signal from the piezoelectric body.

In addition to the pressure detection circuit measuring pressure with the bridge circuit by the resistors, the pressure sensor according to the present invention includes the piezoelectric body disposed on the membrane and the changeover unit switching electric power supply to the pressure detection circuit based on a detection signal from the piezoelectric body. In such a pressure sensor, for example, pressure can be detected only in a required pressure range by stopping or restarting electric power supply based on the detection signal, and electric power consumption can thus be reduced. Moreover, since the piezoelectric body is disposed on the membrane, the changeover unit can accurately stop or restart the electric power supply based on the detection signal from the piezoelectric body, and it is possible to prevent detection omission of pressure change. In addition, the piezoelectric body generates a piezoelectric effect due to a deformation of the membrane. Thus, such a pressure sensor can reduce the electric power required for detecting the deformation of the membrane by the piezoelectric body and supplying the electric power by the switching unit, and this respect also contributes to the reduction of power consumption.

For example, the resistors included in the pressure detection circuit comprise:
first and third resistors arranged at a first strain position generating a predetermined strain characteristic on the membrane; and
second and fourth resistors arranged at a second strain position generating a strain characteristic in a different direction from the first strain position,

the first strain position is located on an outer circumferential side of the second strain position on the membrane, and
the piezoelectric body comprises a first piezoelectric portion disposed in a third strain region generating a strain in the same direction as the first strain position on the membrane.

The third strain region is located on the outer circumferential side of the second strain position for arranging the second resistor and the fourth resistor and is in a comparatively wide range on the membrane. Thus, the degree of freedom in layout can be secured by disposing the piezoelectric body in the third strain region. Moreover, since the third strain region is wide, it is possible to use the piezoelectric body including a comparatively large-sized first piezoelectric portion, and the piezoelectric body having such a first piezoelectric portion can generate a larger electromotive force by deformation of the membrane. When the detection signal is large, the circuit for amplifying the signal can be smaller or omitted, and this respect also contributes to the miniaturization of the device. Moreover, when the detection signal is large, noise can be reduced, and it is thus possible to improve the accuracy of the detection by the piezoelectric body and the sensor by the changeover unit.

For example, the piezoelectric body may comprise a plurality of first piezoelectric portions, and
the changeover unit may switch electric power supply to the pressure detection circuit based on a signal obtained by summing detection signals from the plurality of first piezoelectric portions.

The third strain region is wide as described above and is thus suitable for arranging a plurality of first piezoelectric portions. Moreover, the changeover unit can increase the detected value of the signal based on the signal obtained by summing the detection signals generated from strains in the same direction in the plurality of first piezoelectric portions. Thus, in such a pressure sensor, the circuit for amplifying signals can be smaller or omitted, and this contributes to the miniaturization of the pressure sensor. Moreover, noise can be reduced if the detection signals are large, and it is thus possible to improve the accuracy of detection by the piezoelectric body and switching by the changeover unit.

For example, the piezoelectric body may comprise a second piezoelectric portion disposed in a fourth strain region generating a strain in the same direction as the second strain position on the membrane, and the changeover unit switches electric power supply to the pressure detection circuit based on a signal of difference between a detection signal from the first piezoelectric portion and a detection signal from the second piezoelectric portion. Thus, in such a pressure sensor, the circuit for amplifying signals can be smaller or omitted, and this contributes to the miniaturization of the pressure sensor. Moreover, noise can be reduced if the detection signals are large, and it is thus possible to improve the accuracy of detection by the piezoelectric body and switching by the changeover unit.

The directions of detected strains are different, and the detection signals having reverse signs are output, between the first piezoelectric portion and the second piezoelectric portion. Thus, the detection value (absolute value) of the signal can be increased by a signal difference between the detection signal from the first piezoelectric portion and the detection signal from the second piezoelectric portion.

For example, the piezoelectric body comprises a thin film piezoelectric body made of a thin film.

When the piezoelectric body is the thin film piezoelectric body, this contributes to the miniaturization of the device.

For example, the pressure sensor according to the present invention may comprise:
a side wall connected to an outer edge of the membrane; and
a fillet portion connecting between a predetermined range of the inside of the outer edge of the membrane and the side wall and being gradually thinner from the side wall toward a center of the membrane.

Since the fillet portion is formed, the third strain region formed on the membrane is wider as compared with when no fillet portion is formed. Thus, in such a pressure sensor, it is easy to enlarge the first piezoelectric portion or arrange a plurality of first piezoelectric portions and is possible to improve the accuracy of detection by the piezoelectric body and switching by the changeover unit.

### Brief Description of the Drawings

FIG. 1 is a schematic cross-sectional view of a pressure sensor according to First Embodiment of the present invention;
FIG. 2 is a conceptual diagram illustrating a relation between an arrangement of a resistor and a piezoelectric body and a deformation of a membrane in the pressure sensor according to First Embodiment;
FIG. 3 is a conceptual diagram illustrating an example of a circuit formed using the pressure sensor according to First Embodiment;
FIG. 4 is a conceptual diagram illustrating an arrangement of a resistor and a piezoelectric body in a pressure sensor according to Second Embodiment;
FIG. 5 is a conceptual diagram illustrating an arrangement of a resistor and a piezoelectric body in a pressure sensor according to Third Embodiment;
FIG. 6 is a conceptual diagram illustrating an arrangement of a resistor and a piezoelectric body in a pressure sensor according to Fourth Embodiment;
FIG. 7 is a conceptual diagram illustrating an example of a circuit formed using the pressure sensor according to Fifth Embodiment;
FIG. 8 is a conceptual diagram illustrating an example of a circuit formed using the pressure sensor according to Sixth Embodiment;
FIG. 9 is a conceptual diagram illustrating an example of a circuit formed using the pressure sensor according to Seventh Embodiment;
FIG. 10 is a conceptual diagram illustrating a deformation of a membrane in a pressure sensor according to Eighth Embodiment of the present invention; and
FIG. 11 is a conceptual diagram illustrating a detection output of the piezoelectric body in the pressure sensor according to Third and Fourth Embodiments of the present invention.

### Detailed Description of Invention

Hereinafter, the present invention is described based on embodiments shown in the figures.

### First Embodiment

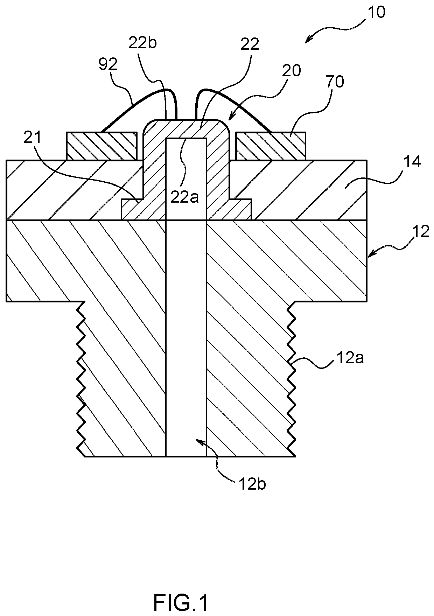

FIG. 1 is a schematic cross-sectional view of a pressure sensor 10 according to the present invention. The pressure sensor 10 includes a membrane 22 that is deformed in response to pressure. In the embodiment shown in FIG. 1, an upper bottom of a stem 20 is the membrane 22. In addition to the stem 20 including the membrane 22, the pressure sensor 10 includes a connection member 12 with a flow path 12b for transmitting pressure to the stem 20, a holding member 14 for fixing the stem 20 to the connection member 12, a substrate portion 70 wired to an electrode portion or the like on the membrane 22, and the like.

As shown in FIG. 1, a screw groove 12a for fixing the pressure sensor 10 to a measurement target is formed on the outer circumference of the connection member 12. The flow path 12b formed inside the connection member 12 tightly communicates with a pressure chamber as a measurement target by fixing the pressure sensor 10 via the screw groove 12a.

As shown in FIG. 1, the stem 20 has a bottomed (upper bottom) cylindrical outer shape and is provided at one end of the flow path 12b in the connection member 12. The stem 20 is provided with a flange portion 21 on the opening side and is fixed to the connection member 12 by sandwiching the flange portion 21 between the holding member 14 and the connection member 12. The opening of the stem 20 and the flow path 12b of the connection member 12 are tightly connected using the holding member 14, and the pressure as a measurement target is transmitted to the membrane 22 of the stem 20.

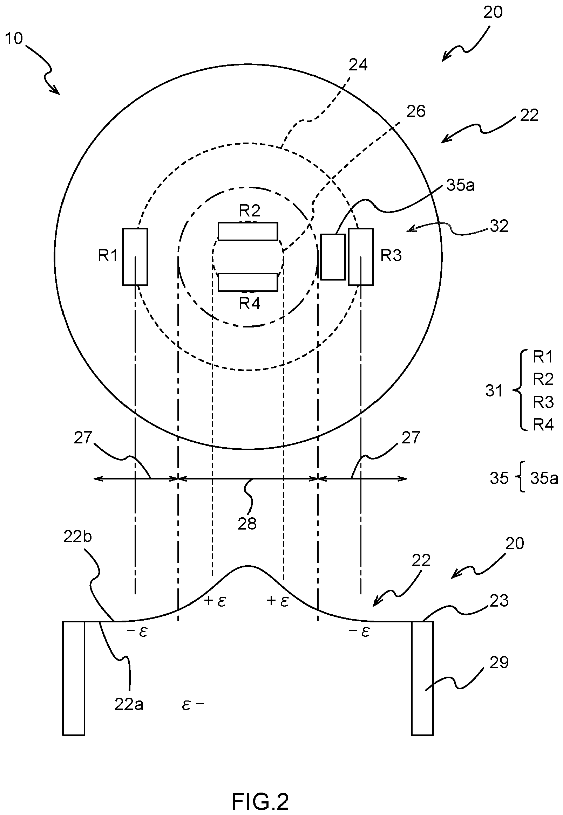

The membrane 22, which is the upper bottom of the stem 20, is thinner than other parts of the stem 20, such as a side wall 29 (see FIG. 2), and is deformed according to the pressure transmitted from the flow path 12b. The membrane 22 has an inner surface 22a that comes into contact with the pressure fluid and an outer surface 22b that is opposite to the inner surface 22a. A pressure detection circuit 32 and a piezoelectric body 35 (see FIG. 2) mentioned below, electrode portions (not shown), and the like are provided on the outer surface 22b side of the membrane 22.

The substrate portion 70 including wirings, electrode portions, and the like electrically connected to the pressure detection circuit 32 and the piezoelectric body 35 formed on the outer surface 22b of the membrane 22 is fixed to the holding member 14 shown in FIG. 1. The electrode portion of the substrate portion 70 and the electrode portion on the membrane 22 are electrically connected via a connection wiring 92 or the like formed by wire bonding or the like. The substrate portion 70 has a ring outer shape, and the stem 20 inserts a through hole formed at the center of the substrate portion 70.

FIG. 2 is a conceptual diagram illustrating an arrangement of a resistor 31 and a piezoelectric body 35 in the pressure sensor 10 according to First Embodiment. The upper part of FIG. 2 is a schematic plan view of the stem 20 when viewed from the upper side, which is the outer surface 22b side of the membrane 22, and the lower part of FIG. 2 is a schematic cross-sectional view of the stem 20.

As shown in FIG. 2, the pressure sensor 10 includes: a pressure detection circuit 32 detecting a deformation of the membrane 22 with a bridge circuit formed by a first resistor R1, a second resistor R2, a third resistor R3, and a fourth resistor R4; and the piezoelectric body 35 detecting the deformation of the membrane 22 independently from the pressure detection circuit 32. The pressure detection circuit 32 includes at least four resistors R1 to R4 arranged on the outer surface 22b of the membrane 22. As with the resistors R1 to R4, the piezoelectric body 35 is also disposed on the outer surface 22b of the membrane 22.

As shown in the schematic plan view of the upper part of FIG. 2, the resistors R1 to R4 included in the pressure detection circuit 32 include the first resistor R1 and the third resistor R3 arranged on a first circumference 24 and the second resistor R2 and the fourth resistor R4 arranged on a second circumference 26. As shown in the schematic cross-sectional view of the lower part of FIG. 2, the first circumference 24 is a first strain position that generates a predetermined strain characteristic on the membrane 22, and the second circumference 26 is a second strain position that generates a strain characteristic different from that on the first circumference 24 (first strain position) on the membrane 22

As shown in FIG. 2, the first circumference 24 (first strain position) is a circumference of a circle having a radius larger than that of the second circumference 26 (second strain position) and is located on the outer circumferential side of the second circumference 26. For example, when the membrane 22 receives a predetermined positive pressure from the inner surface 22a, a negative strain -ε (compressive strain) is generated on the first circumference 24, whereas a positive strain +ε (tensile strain) is generated on the second circumference 26. In this way, preferably, the strain characteristic on the first circumference 24 (first strain position) and the strain characteristic on the second circumference 26 (second strain position) are in different directions (relation in which the symbols are different and cancel each other out).

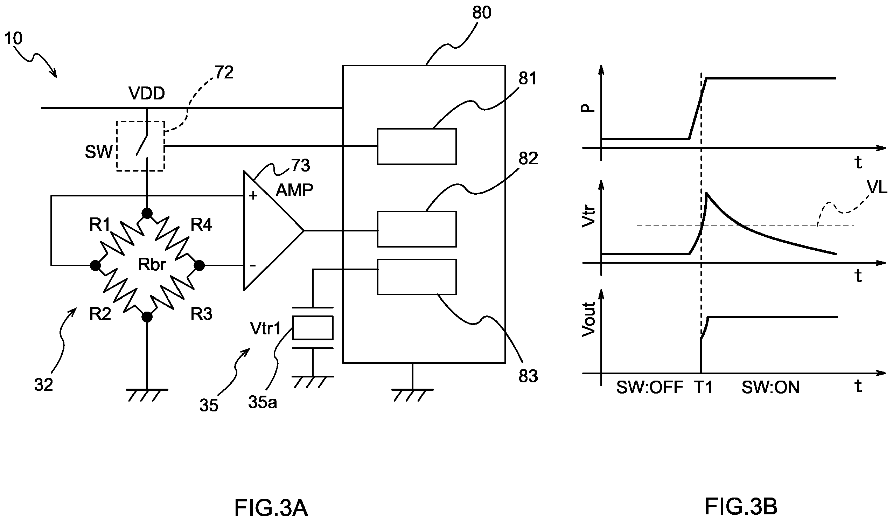

The pressure detection circuit 32 shown in FIG. 2 includes four resistors R1 to R4. However, the number of resistors R1 to R4 included in the pressure detection circuit 32 is not limited to only four. For example, the pressure detection circuit 32 may form a bridge circuit as shown in FIG. 3 with five or more resistors.

In the pressure detection circuit 32 shown in FIG. 2, the number of resistors R1 and R3 arranged on the first circumference 24 and the number of resistors R2 and R4 arranged on the second circumference 26 are both two. However, the number of resistors R1 and R3 arranged on the first circumference 24 and the number of resistors R2 and R4 arranged on the second circumference 26 may be three or more. The number of resistors R1 and R3 arranged on the first circumference 24 and the number of resistors R2 and R4 arranged on the second circumference 26 may be the same or different.

As shown in the plan view of the upper part of FIG. 2, the piezoelectric body 35 includes a first piezoelectric portion 35a. The first piezoelectric portion 35a is disposed in a third strain region 27 that generates a strain in the same direction as the first circumference 24 (first strain position) on the membrane 22. As shown in the schematic cross-sectional view of the bottom part of FIG. 2, when the membrane 22 receives a predetermined positive pressure from the inner surface 22a, the same negative strain -ε (compressive strain) as on the first circumference 24 is generated in the third strain region 27 of the membrane 22.

As shown in FIG. 2, the first piezoelectric portion 35a of the piezoelectric body 35 is disposed in the third strain region 27 on the center side of the first circumference 24. However, the disposition of the first piezoelectric portion 35a is not limited to this, and the first piezoelectric portion 35a may be disposed in the third strain region 27 on the outer circumferential side of the first circumference 24 or may be disposed on the first circumference 24. The third strain region 27 includes the first circumference 24.

FIG. 3A is a conceptual diagram illustrating an example of a circuit formed with the pressure sensor 10. As shown in FIG. 3A, the first to fourth resistors R1 to R4 included in the pressure detection circuit 32 form a bridge circuit. An output signal Vout of the pressure detection circuit 32 is input to a pressure signal input unit 82 of a microprocessor 80 via an amplifier 73. Although not illustrated in FIG. 2, an electrode portion for supplying electric power to the first to fourth resistors R1 to R4 constituting the pressure detection circuit 32 or transmitting the output signal Vout of the pressure detection circuit 32 by the first to fourth resistors R1 to R4 is formed on the membrane 22. The pressure detection circuit 32 is electrically connected to the substrate portion 70 via the electrode portion and a connection wiring 92 (see FIG. 1).

As shown in FIG. 3A, the piezoelectric body 35 including the first piezoelectric portion 35a is not connected to the pressure detection circuit 32 at least on the membrane 22 and can detect a strain independently from the pressure detection circuit 32. A detection signal Vtr1 of the first piezoelectric portion 35a is input to the detection signal input unit 83 of the microprocessor 80.

As shown in FIG. 3A, the pressure sensor 10 includes a changeover unit 72 for switching electric power supply to the pressure detection circuit 32 based on a detection signal Vtr from the piezoelectric body 35. The microprocessor 80, the changeover unit 72, and the amplifier 73 shown in FIG. 3 can be arranged, for example, on the substrate portion 70, but their arrangement is not limited.

The changeover unit 72 includes a switch disposed on the substrate portion 70 (see FIG. 1). When the switch is ON, electric power is supplied to the pressure detection circuit 32. When the switch is OFF, electric power supply to the pressure detection circuit 32 is stopped. ON/OFF of the changeover unit 72 is controlled by a switch control unit 81 of the microprocessor 80.

The switch control unit 81 controls the changeover unit 72 based on the detection signal Vtr of the piezoelectric body 35 based on the detection signal Vtr1 by the first piezoelectric portion 35a. In the pressure sensor 10, as shown in FIG. 1, since the piezoelectric body 35 includes one first piezoelectric portion 35a, the detection signal Vtr of the piezoelectric body 35 input to the pressure signal input unit 82 is the same as the detection signal Vtr1 by the first piezoelectric portion 35a.

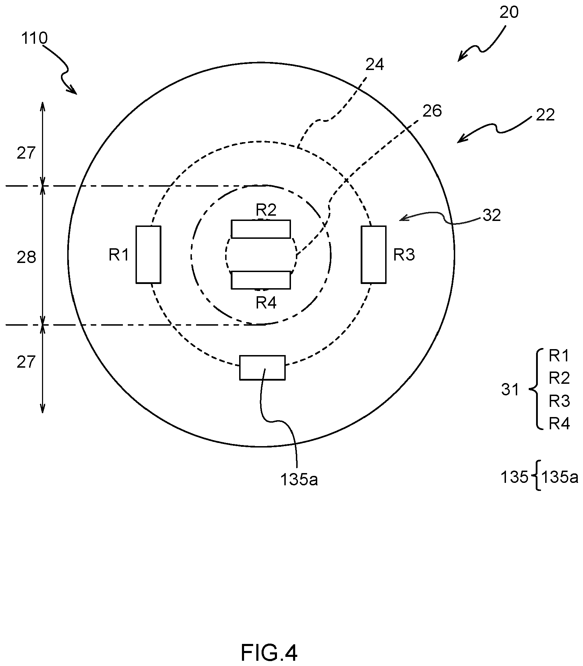

FIG. 3B is graphs showing output results of a pressure P, the detection signal Vtr, and the output signal Vout in the pressure sensor 10 including the circuit shown in FIG. 3A. The vertical axes of the graphs shown in FIG. 4 indicate the height of the pressure P and signal intensities of the detection signal Vtr and the output signal Vout, and the horizontal axes of the graphs indicate the time t. The graphs shown in FIG. 3B assume a case where a positive strain is generated in the third strain region 27 for disposing the first piezoelectric portion 35a. As shown in FIG. 2, however, even when a negative strain is generated in the third strain region 27, it can be considered in the same manner, for example, provided that the strain is regarded as an absolute value.

As shown in the left region of FIG. 3B, when the pressure of the pressure fluid as a measurement target of the pressure sensor 10 is kept low, a strain or a change in strain generated in the third strain region 27 is small, and the detection signal Vtr detected by the piezoelectric body 35 is thus smaller than a predetermined value VL. In this case, the switch control unit 81 shown in FIG. 3A determines that the detection signal Vtr is not the predetermined value VL or more via the detection signal input unit 83 and keeps the switch of the changeover unit 72 in the OFF state.

When the switch of the changeover unit 72 shown in FIG. 3A is in the OFF state, no electric power is supplied to the pressure detection circuit 32. Thus, as shown in the left part of the lower graph in FIG. 3B, the pressure detection circuit 32 detects no strain, and the value of the output signal Vout from the pressure detection circuit 32 does not change. The predetermined value VL for switching ON/OFF of electric power supply can be determined based on, for example, pressure and pressure fluctuation that trigger the pressure detection by the pressure sensor 10.

Next, as shown in the right region of FIG. 3B, when the pressure of the pressure fluid as a measurement target of the pressure sensor 10 rises, a strain or a change in strain generated in the third strain region 27 becomes large, and the detection signal Vtr detected by the piezoelectric body 35 becomes the predetermined value VL or more (time T1). In this case, the switch control unit 81 shown in FIG. 3A determines that the detection signal Vtr becomes the predetermined value VL or more via the detection signal input unit 83 and switches the switch of the changeover unit 72 to the ON state.

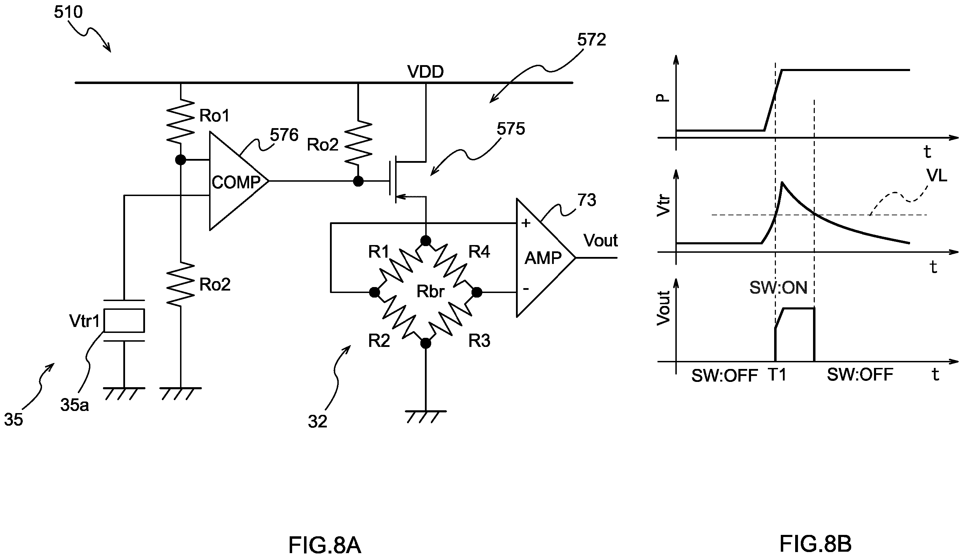

When the switch of the changeover unit 72 shown in FIG. 3A is in the ON state, electric power is supplied to the pressure detection circuit 32. Thus, as shown in the right part of the lower graph in FIG. 3B, the pressure detection circuit 32 including the first to fourth resistors R1 to R4 detects a strain of the membrane 22 generated by pressure, and the value of the output signal Vout from the pressure detection circuit 32 changes depending on the pressure P. The switch of the changeover unit 72 may be kept in the ON state until a predetermined timing even after the detection signal Vtr becomes smaller than the predetermined value VL and may be switched from ON to OFF corresponding to the detection signal Vtr becoming smaller than the predetermined value VL (see FIG. 8B).

As described above, in the pressure sensor 10, no electric power is supplied to the pressure detection circuit 32 forming a bridge circuit until the piezoelectric body 35 detects a deformation of the membrane 22 with the detection signal Vtr exceeding the predetermined value VL. Thus, the pressure sensor 10 can achieve low electric power consumption. Moreover, since the pressure sensor 10 constantly detects the pressure as a measurement target using the piezoelectric body 35, the electric power supply is appropriately switched by the changeover unit 72 even if the pressure rises momentarily, and detection omission of pressure change can be prevented.

The pressure detection accuracy of the piezoelectric body 35 is sufficient as long as the electric power supply by the changeover unit 72 can be switched appropriately and may be lower than the pressure detection accuracy of the pressure detection circuit 32 forming a bridge circuit.

As with the pressure detection circuit 32, the piezoelectric body 35 detects a deformation of the membrane 22 corresponding to the pressure. Unlike the pressure detection circuit 32 using the resistors R1 to R4, however, the piezoelectric body 35 is polarized with the deformation of the membrane 22 and has a spontaneous potential difference on its surface. Thus, the piezoelectric body 35 can function as a sensor for switching electric power supply to the pressure detection circuit 32 even without supplying electric power from the outside, and the wiring to the piezoelectric body 35 formed on the membrane 22 is simple.

In the circuit shown in FIG. 3A, a predetermined voltage can be applied to the piezoelectric body 35, for example, for improvement in the accuracy of the detection signal Vtr. Even in such a case, since the piezoelectric body 35 hardly flows electric current, the pressure detection using the piezoelectric body 35 can significantly reduce the electric power consumption as compared with the detection using the resistors R1 to R4.

The stem 20 including the membrane 22 as shown in FIG. 2 and the pressure detection circuit 32 and the piezoelectric body 35 provided on the membrane 22 are manufactured, for example, as follows. First, the stem 20 including the membrane 22 is manufactured by machining. The material of the stem 20 is not limited as long as it generates an appropriate elastic deformation, and examples thereof include metals and alloys such as stainless steel.

Next, a semiconductor thin film or a metal thin film is formed on the membrane 22 with an insulating film interposed therebetween, a piezoelectric thin film is further partially formed, and these thin films are subjected to a fine processing with a semiconductor processing technique, such as laser processing and screen printing, so as to form the pressure detection circuit 32 including the first to fourth resistors R1 to R4 and the first piezoelectric portion 35a as shown in FIG. 2. If necessary, an insulating surface layer may be formed on the upper surfaces of the pressure detection circuit 32 and the first piezoelectric portion 35a. The pressure sensor 10 including the piezoelectric body 35 with the first piezoelectric portion 35a made of a thin film piezoelectric body and manufactured using the semiconductor processing technique is advantageous for miniaturization.

### Second Embodiment

FIG. 4 is a schematic plan view illustrating an arrangement of the resistor 31 and a piezoelectric body 135 in a pressure sensor 110 according to Second Embodiment. The pressure sensor 110 according to Second Embodiment is similar to the pressure sensor 10 according to First Embodiment, except that the arrangement of a first piezoelectric portion 135a included in the piezoelectric body 135 is different from that in the pressure sensor 10 shown in FIG. 2. The pressure sensor 110 according to Second Embodiment is described focusing on the differences from the pressure sensor 10 according to First Embodiment, and common matters are not described.

The piezoelectric body 135 of the pressure sensor 110 includes one first piezoelectric portion 135a, and the first piezoelectric portion 135a is disposed in the third strain region 27 that generates a strain in the same direction as the first strain position. The location of the piezoelectric body 135 is not limited as long as a strain can be detected on the membrane 22, but the restrictions on the arrangement and size of the piezoelectric body 135 can be relaxed by disposing the piezoelectric body 135 in the third strain region 27 formed in a wide range on the membrane 22 and generating strains in the same direction. Thus, the pressure sensor 110 including the first piezoelectric portion 135a disposed in the third strain region 27 can adopt, for example, the large-sized first piezoelectric portion 135a so as to increase the pressure detection sensitivity by the piezoelectric body 135. If the piezoelectric body 135 has a high detection sensitivity, it may be possible to omit or reduce a circuit such as an amplifier for amplifying the detection signal, and this is advantageous from the viewpoint of reduction of power consumption and miniaturization.

As shown in FIG. 4, the first piezoelectric portion 135a can align the direction and magnitude of the strain to be detected with respect to the first resistor R1 and the third resistor R3 by disposing the first piezoelectric portion 135a on the first circumference 24 (first strain position). In such a pressure sensor 110, the correspondence between the detection signal of the piezoelectric body 135 and the output signal of the pressure detection circuit 32 by the resistor 31 can be determined with a higher accuracy, and the changeover unit 72 (see FIG. 3A) of the pressure sensor 110 can thus be operated with high accuracy. As for the common matters with the pressure sensor 10 according to First Embodiment, the pressure sensor 110 exhibits effects similar to those of the pressure sensor 10.

### Third Embodiment

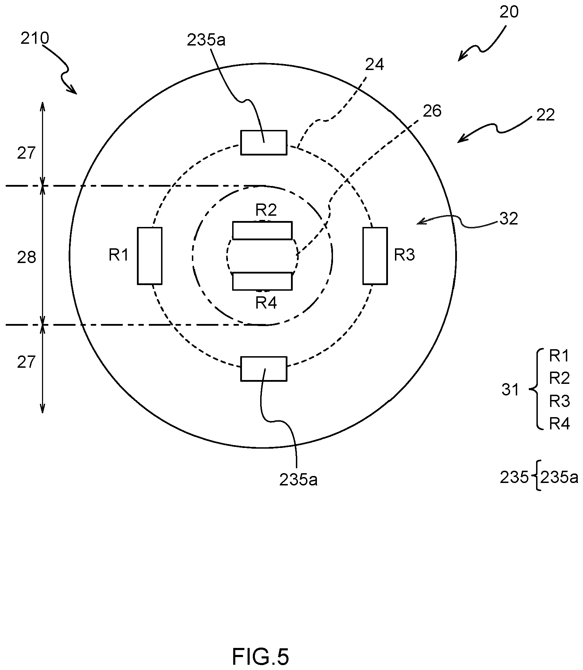

FIG. 5 is a schematic plan view illustrating an arrangement of the resistor 31 and a piezoelectric body 235 in a pressure sensor 210 according to Third Embodiment. The pressure sensor 210 according to Third Embodiment is similar to the pressure sensor 110 according to Second Embodiment, except that the pressure sensor 210 is different from the pressure sensor 110 shown in FIG. 4 in that the piezoelectric body 235 includes a plurality (two in FIG. 5) of first piezoelectric portions 235a. The pressure sensor 210 according to Third Embodiment is described focusing on the differences from the pressure sensor 110 according to Second Embodiment, and common matters are not described.

The piezoelectric body 235 of the pressure sensor 210 includes two first piezoelectric portions 235a, and the two first piezoelectric portions 235a are arranged in the third strain region 27 that generates a strain in the same direction as the first strain position. In the pressure sensor 210, both of the two first piezoelectric portions 235a are arranged on the first circumference 24 (first strain position), but the arrangement of the first piezoelectric portions 235a is not limited to this. In the piezoelectric sensor 210, either or both of the two first piezoelectric portions 235a may be arranged in the third strain region 27 excluding the first circumference 24.

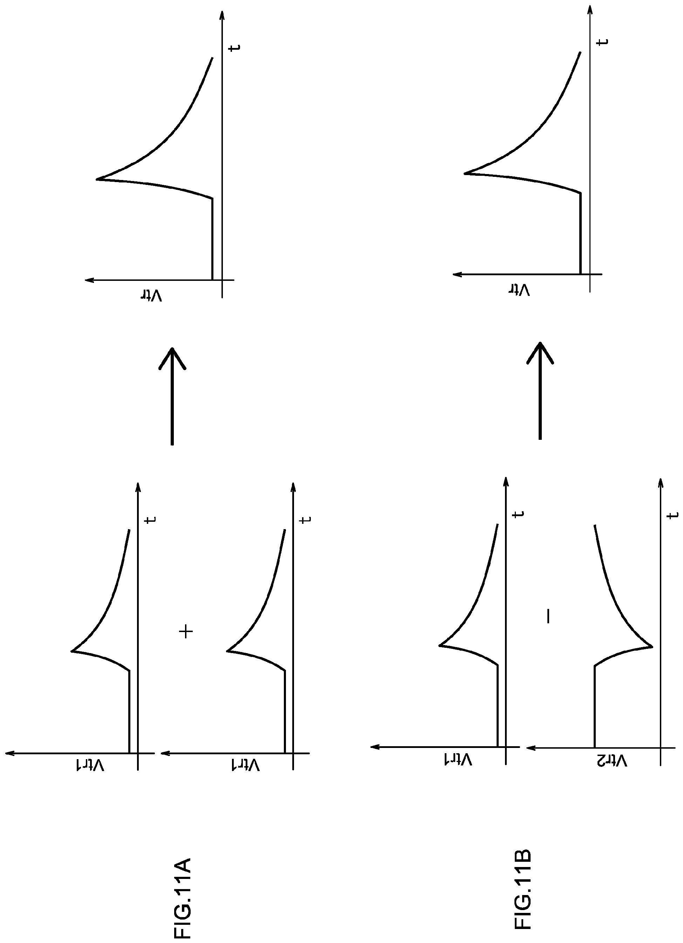

In the pressure sensor 210, detection signals Vtrl from the two first piezoelectric portions 235a are input to the detection signal input unit 83 of the microprocessor 80 shown in FIG. 3. FIG. 11A is a conceptual diagram illustrating a processing of the detection signal by the microprocessor 80 of the pressure sensor 210. As shown in FIG. 11A, the microprocessor 80 calculates a detection signal Vtr obtained by summing the detection signals Vtr1 from the plurality of first piezoelectric portions 235a. Then, the changeover unit 72 of the pressure sensor 210 switches electric power supply to the pressure detection circuit 32 based on the detection signal Vtr obtained by summing the detection signals Vtr1 from the plurality of first piezoelectric portions 235a (see FIG. 3).

In such a pressure sensor 210, the signal detected by the piezoelectric body 235 can be strengthened by summing the detection signals Vtr1 from the plurality of first piezoelectric portions 235a, the changeover unit 72 can operate more precisely. As for the common matters with the pressure sensor 110 according to Second Embodiment, the pressure sensor 210 exhibits effects similar to those of the pressure sensor 110.

### Fourth Embodiment

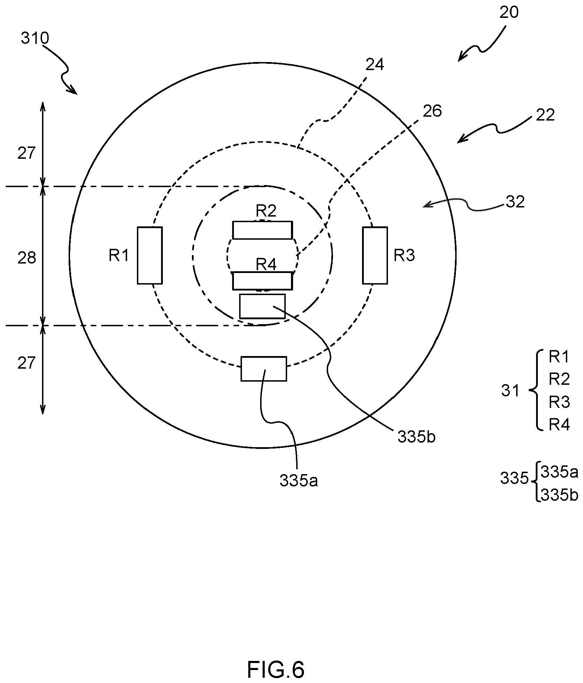

FIG. 6 is a schematic plan view illustrating an arrangement of the resistor 31 and a piezoelectric body 335 in a pressure sensor 310 according to Fourth Embodiment. The pressure sensor 310 according to Fourth Embodiment is different from the pressure sensor 110 shown in FIG. 4 in that the piezoelectric body 235 includes a second piezoelectric portion 335b in addition to a first piezoelectric portion 335a. In other respects, however, the pressure sensor 310 according to Fourth Embodiment is similar to the pressure sensor 110 according to Second Embodiment. The pressure sensor 310 according to Fourth Embodiment is described focusing on the differences from the pressure sensor 110 according to Second Embodiment, and common matters are not described.

As shown in FIG. 6, the piezoelectric body 335 of the pressure sensor 310 includes the first piezoelectric portion 335a and the second piezoelectric portion 335b. The first piezoelectric portion 335a is similar to the first piezoelectric portion 135a shown in FIG. 4 and is disposed in the third strain region 27 on the membrane 22. The second piezoelectric portion 335b includes, for example, a thin film piezoelectric body as with the first piezoelectric portion 335a and is disposed in a fourth strain region 28 on the membrane 22. The fourth strain region 28 is a region that generates a strain in the same direction as the second circumference 26, which is a second strain position for arranging the second resistor R2 and the fourth resistor R4 on the membrane 22 (see FIG. 2).

In the pressure sensor 310, a detection signal Vtrl from the first piezoelectric portion 335a and a detection signal Vtr2 from the second piezoelectric portion are input to the detection signal input unit 83 of the microprocessor 80 shown in FIG. 3. FIG. 11B is a conceptual diagram illustrating a processing of the detection signal in the microprocessor 80 of the pressure sensor 310. As shown in FIG. 11B, the microprocessor 80 calculates a detection signal Vtr of the difference between the detection signal Vtr1 from the first piezoelectric portion 335a and the detection signal Vtr2 from the second piezoelectric portion 335b. Then, the changeover unit 72 of the pressure sensor 310 switches electric power supply to the pressure detection circuit 32 based on the detection signal Vtr of the difference between the detection signal Vtr1 from the first piezoelectric portion 335a and the detection signal Vtr2 from the second piezoelectric portion 335b (see FIG. 3).

In such a pressure sensor 310, since the signal detected by the piezoelectric body 335 can be strengthened by obtaining the detection signal Vtr of the difference between the detection signal Vtr1 from the first piezoelectric portion 335a and the detection signal Vtr2 from the second piezoelectric portion 335b, the changeover unit 72 can operate more accurately. As for the common matters with the pressure sensor 110 according to Second Embodiment, the pressure sensor 310 exhibits effects similar to those of the pressure sensor 110.

### Fifth Embodiment

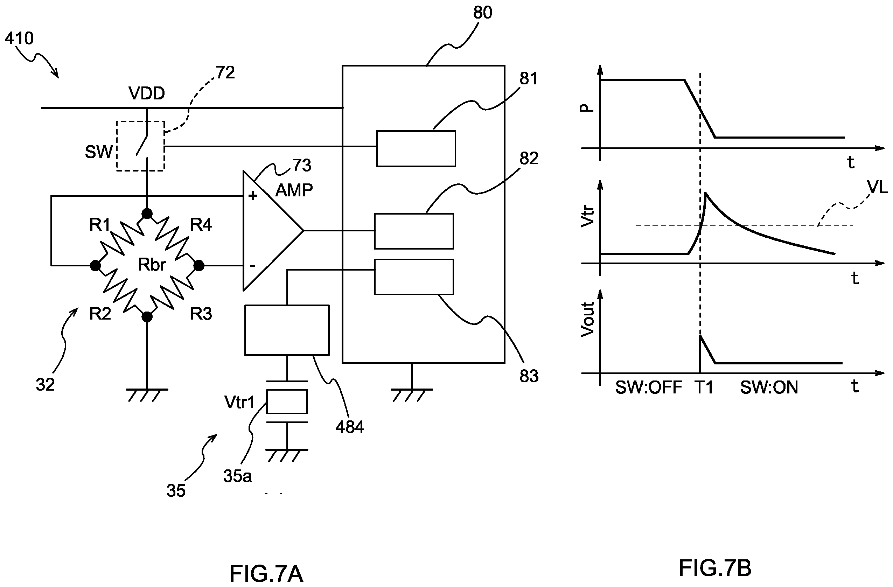

FIG. 7A is a conceptual diagram illustrating a circuit of a pressure sensor 410 according to Fifth Embodiment. The circuit of the pressure sensor 410 shown in FIG. 7A is different from the circuit of the pressure sensor 10 shown in FIG. 3A in that the detection signal Vtr1 of the first piezoelectric portion 35a is input to the detection signal input unit 83 after passing through a diode bridge 484. In other respects, however, the circuit of the pressure sensor 410 shown in FIG. 7A is similar to the circuit of the pressure sensor 10 according to First Embodiment. The pressure sensor 410 according to Fifth Embodiment is described focusing on the differences from the pressure sensor 10 according to First Embodiment, and common matters are not described.

When the detection signal Vtr1 of the first piezoelectric portion 35a is a negative voltage, the diode bridge 484 shown in FIG. 7A inverts and outputs the detection signal Vtr1. Thus, in the detection signal Vtr of the piezoelectric body 35 input to the detection signal input unit 83 shown in FIG. 7A, a positive signal responding to the deformation of the membrane 22 is input regardless of whether the pressure rises or falls.

FIG. 7B is graphs showing an example of output results of a pressure P, the detection signal Vtr, and the output signal Vout in the pressure sensor 410 including the circuit shown in FIG. 7A. As shown in the left region of FIG. 7B, when the pressure of the pressure fluid as a measurement target of the pressure sensor 410 is kept high, the strain or change in strain generated in the membrane 22 is small, and the detection signal Vtr detected by the piezoelectric body 35 and input to the detection signal input unit 83 is thus smaller than a predetermined value VL. In this case, the switch control unit 81 shown in FIG. 7A keeps the switch of the changeover unit 72 in the OFF state.

When the switch of the changeover unit 72 shown in FIG. 7B is in the OFF state, no electric power is supplied to the pressure detection circuit 32. Thus, as shown in the left part of the lower graph of FIG. 7B, the pressure detection circuit 32 detects no strain, and the value of the output signal Vout from the pressure detection circuit 32 does not change.

Next, as shown in the right region of FIG. 7B, when the pressure of the pressure fluid as a measurement target of the pressure sensor 410 decreases, the detection signal Vtr detected by the piezoelectric body 35 and input to the detection signal input unit 83 becomes the predetermined value VL or more (time T1). In this case, the switch control unit 81 shown in FIG. 7A determines that the detection signal Vtr becomes the predetermined value VL or more via the detection signal input unit 83 and switches the switch of the changeover unit 72 to the ON state.

When the switch of the changeover unit 72 shown in FIG. 7A is in the ON state, electric power is supplied to the pressure detection circuit 32. Thus, as shown in the right part of the lower graph of FIG. 7B, the pressure detection circuit 32 including the first to fourth resistors R1 to R4 detects a strain of the membrane 22 generated by pressure, and the value of the output signal Vout from the pressure detection circuit 32 changes depending on the pressure P.

As described above, in the pressure sensor 410, since the diode bridge 484 is disposed between the first piezoelectric portion 35a and the detection signal input unit 83, even when the pressure rises as shown in FIG. 3B or drops as shown in FIG. 7B, the electric power supply to the pressure detection circuit 32 can be started by a predetermined pressure fluctuation as a trigger. As for the common matters with the pressure sensor 110 according to Second Embodiment, the pressure sensor 310 exhibits effects similar to those of the pressure sensor 110.

### Sixth Embodiment

FIG. 8A is a conceptual diagram illustrating a circuit of a pressure sensor 510 according to Sixth Embodiment. The circuit of the pressure sensor 510 shown in FIG. 8A is different from that of the pressure sensor 10 according to First Embodiment in that a changeover unit 572 is not a switch controlled by the microprocessor 80 as shown in FIG. 3A, but is configured by a transistor 575 or the like. In other respects, however, the circuit of the pressure sensor 510 shown in FIG. 8A is similar to the circuit of the pressure sensor 10 shown in FIG. 3A. The pressure sensor 510 according to Sixth Embodiment is described focusing on the differences from the pressure sensor 10 according to First Embodiment, and common matters are not described.

As shown in FIG. 8A, the changeover unit 572 of the pressure sensor 510 is achieved by a circuit consisting of a resistance Ro1, two resistances Ro2, a comparator 576, and a transistor 575. In the changeover unit 572 shown in FIG. 5, the transistor 575 is disposed at the entrance from the power supply voltage VDD to the pressure detection circuit 32, and the electric power supply to the pressure detection circuit 32 is switched by the transistor 575. The detection signal Vtr1 of the first piezoelectric portion 35a is binarized by the comparator 576 and input to the third terminal of the transistor 575. As a result, ON/OFF of the electric power supply to the pressure detection circuit 32 is switched based on the detection signal Vtr1 from the first piezoelectric portion 35a.

FIG. 8B is graphs showing an example of output results of a pressure P, the detection signal Vtrl, and the output signal Vout in the pressure sensor 510 including the circuit shown in FIG. 8A. As with the circuit of the pressure sensor 10 shown in FIG. 3A, also in the circuit of the pressure sensor 510, as shown in FIG. 8B, the deformation of the membrane 22 is detected by the first piezoelectric portion 35a, and the changeover unit 572 can switch electric power supply to the pressure detection circuit 32 based on the detection signal Vtr1. As for the common matters with the pressure sensor 10 according to First Embodiment, the pressure sensor 510 exhibits effects similar to those of the pressure sensor 10.

### Seventh Embodiment

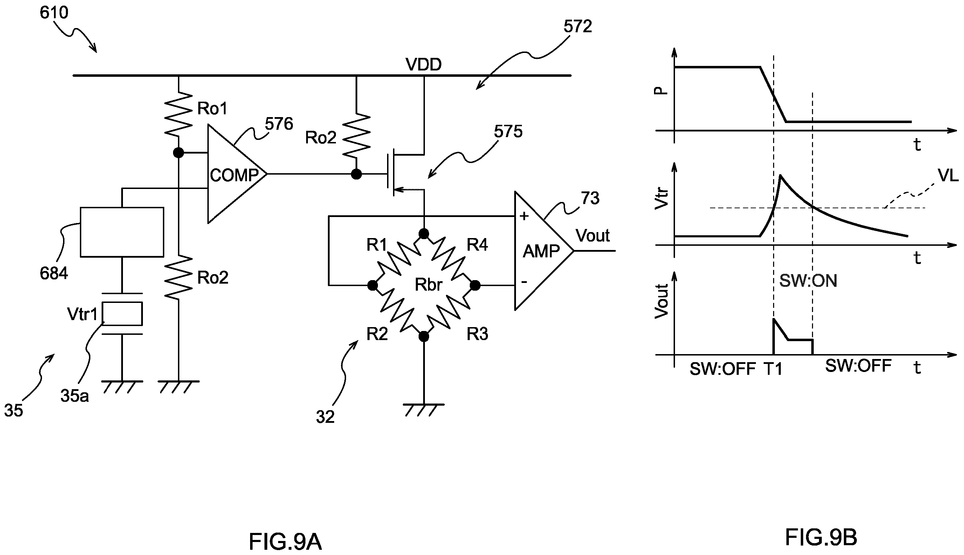

FIG. 9A is a conceptual diagram showing a circuit of a pressure sensor 610 according to Seventh Embodiment. The circuit of the pressure sensor 610 shown in FIG. 9A is different from the circuit of the pressure sensor 510 shown in FIG. 8A in that the detection signal Vtr1 of the first piezoelectric portion 35a is input to a comparator 576 after passing through a diode bridge 684. In other respects, however, the circuit of the pressure sensor 610 shown in FIG. 9A is similar to the circuit of the pressure sensor 510 according to Sixth Embodiment. The pressure sensor 610 according to Seventh Embodiment is described focusing on the differences from the pressure sensor 510 according to Sixth Embodiment, and common matters are not described.

As with the diode bridge 484 shown in FIG. 7A, when the detection signal Vtr1 of the first piezoelectric portion 35a is a negative voltage, the diode bridge 684 shown in FIG. 9A inverts and outputs it. Thus, a positive signal responding to the deformation of the membrane 22 is input to the comparator 576 shown in FIG. 9A regardless of whether the pressure rises or falls.

FIG. 9B is graphs showing an example of output results of a pressure P, the detection signal Vtrl, and the output signal Vout in the pressure sensor 610 including the circuit shown in FIG. 9A. As with the circuit of the pressure sensor 410 shown in FIG. 7A, also in the circuit of the pressure sensor 610, as shown in FIG. 9B, the deformation of the membrane 22 is detected by the first piezoelectric portion 35a, and the changeover unit 572 can switch electric power supply to the pressure detection circuit 32 based on the detection signal Vtr1. As for the common matters with the pressure sensor 510 according to Sixth Embodiment, the pressure sensor 610 exhibits effects similar to those of the pressure sensor 510.

### Eighth Embodiment

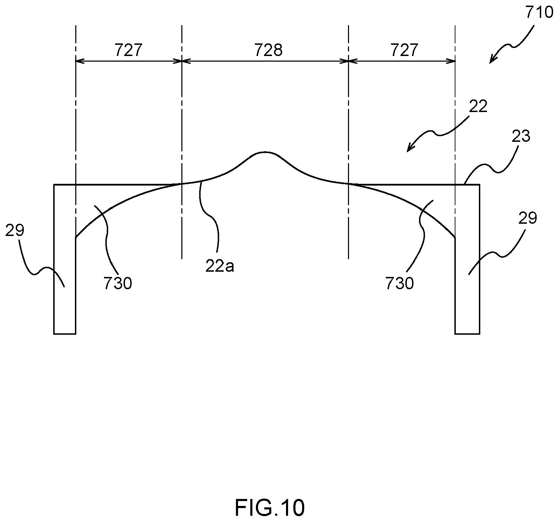

FIG. 10 is a schematic cross-sectional view of a pressure sensor 710 according to Eighth Embodiment. The pressure sensor 710 is different from the pressure sensor 10 shown in FIG. 2 in that the pressure sensor 710 includes a fillet portion 730. In other respects, however, the pressure sensor 710 is similar to the pressure sensor 10 according to First Embodiment. The pressure sensor 710 according to Eighth Embodiment is described focusing on the differences from the pressure sensor 10 according to First Embodiment, and common matters are not described.

As shown in FIG. 10, the fillet portion 730 connects between the side wall 29 connected to an outer edge 23 of the membrane 22 and the inner surface 22a of the membrane 22. In particular, the fillet portion 730 is connected not to the entire inner surface 22a of the membrane 22, but only to a predetermined range of the inside of the outer edge 23 of the membrane 22.

The fillet portion 730 gradually becomes thinner from the side wall 29 toward the center of the membrane 22 and is not connected to a fourth strain region 728 on the center side of the membrane 22. The fillet portion 730 may be made of the same material as the side wall 29 or the inner surface 22a of the membrane 22 or may be made of a different material.

In the pressure sensor 710 including the fillet portion 730, a ratio of the third strain region 727 to the fourth strain region 728 tends to be larger than that in the pressure sensor 10 including no fillet portion. Thus, the pressure sensor 710 including the fillet portion 730 shown in FIG. 10 can easily have a sufficient disposition space when the first piezoelectric portion 25a is disposed in the third strain region 727. Thus, the pressure sensor 710 can increase the detection output of the piezoelectric body and is advantageous for miniaturization. As for the common matters with the pressure sensor 10 according to First Embodiment, the pressure sensor 710 exhibits effects similar to those of the pressure sensor 10.

As described above, the pressure sensor according to the present invention is described with reference to embodiments, but the present invention is not limited to only these embodiments and, needless to say, may include many other embodiments and modifications. For example, the number and arrangement of first piezoelectric portions 35a, 135a, 235a, and 335a and second piezoelectric portion 335b are not limited to those shown in FIG. 2 and FIG. 4 to FIG. 6, and the first piezoelectric portions 35a, 135a, 235a, and 335a and the second piezoelectric portion 335b can be arranged at any locations where a strain is generated on the membrane 22. Moreover, the membrane of the pressure sensor is not limited to only the stem or the metal plate and can be a membrane with other shapes and materials.

### Explanation of References

10, 110, 210, 310, 410, 510, 610, 710... pressure sensor
12... connection member
12a... screw groove
12b... flow path
14... holding member
20... stem
21... flange portion
22a... inner surface
22b... outer surface
22... membrane
23... outer edge
24... first circumference (first strain position)
26... second circumference (second strain position)
27, 727... third strain region
28, 728... fourth strain region
29... side wall
31... resistor
32... pressure detection circuit
R1... first resistor
R2... second resistor
R3... third resistor
R4... fourth resistor
35, 135, 235, 335... piezoelectric body
35a, 135a, 235a, 335a... first piezoelectric portion
335b... second piezoelectric portion
VL... predetermined value (detection threshold)
70... substrate portion
72, 572... changeover unit
73... amplifier
80... microprocessor
81... switch control unit
82... pressure signal input unit
83... detection signal input unit
92... connection wiring
Vout... output signal
Vtr, Vtr1... detection signal
P... pressure
484, 684... diode bridge
575... transistor
576... comparator
Ro1... resistance
Ro2... resistance
730... fillet portion

## Claims

1. A pressure sensor (10) comprising:
a membrane (22) generating a deformation in response to pressure;
a pressure detection circuit (32) including at least four resistors (R1-R4) arranged on the membrane and detecting the deformation of the membrane with a bridge circuit formed by the resistors;
the pressure sensor characterized that it comprises: a
piezoelectric body (35) disposed on the membrane and detecting the deformation of the membrane; and
a changeover unit (72) switching electric power supply to the pressure detection circuit based on a detection signal from the piezoelectric body.

2. The pressure sensor according to claim 1, wherein
the resistors included in the pressure detection circuit comprise:
first and third resistors arranged at a first strain position (24) generating a predetermined strain characteristic on the membrane; and
second and fourth resistors arranged at a second strain position (26) generating a strain characteristic in a different direction from the first strain position,
the first strain position is located on an outer circumferential side of the second strain position on the membrane, and
the piezoelectric body comprises a first piezoelectric portion (35a, 135a) disposed in a third strain region (27) generating a strain in the same direction as the first strain position on the membrane.

3. The pressure sensor according to claim 2, wherein
the piezoelectric body comprises a plurality of first piezoelectric portions (235a, 335a),
the changeover unit switches electric power supply to the pressure detection circuit based on a signal obtained by summing detection signals from the plurality of first piezoelectric portions.

4. The pressure sensor according to claim 2, wherein
the piezoelectric body comprises a second piezoelectric portion (335b) disposed in a fourth strain region (28) generating a strain in the same direction as the second strain position on the membrane, and
the changeover unit switches electric power supply to the pressure detection circuit based on a signal of difference between a detection signal from the first piezoelectric portion and a detection signal from the second piezoelectric portion.

5. The pressure sensor according to any of claim 1 to claim 4, wherein the piezoelectric body comprises a thin film piezoelectric body made of a thin film.

6. The pressure sensor according to any of claims 2 to 4, comprising:
a side wall (29) connected to an outer edge of the membrane; and
a fillet portion (730) connecting between a predetermined range of the inside of the outer edge of the membrane and the side wall and being gradually thinner from the side wall toward a center of the membrane.

## Patentansprüche

1. Ein Drucksensor (10) aufweisend:
eine Membran (22), die als Reaktion auf Druck eine Verformung erzeugt;
eine Detektionsschaltung (32) für den Druck, die mindestens vier auf der Membran angeordnete Widerstände (R1-R4) aufweist und die Verformung der Membran mit einer von den Widerständen gebildeten Brückenschaltung erfasst;
**dadurch gekennzeichnet, dass** der Drucksensor
einen piezoelektrischen Körper (35), der auf der Membran angeordnet ist und die Verformung der Membran erfasst, und
eine Umschalteinheit (72) aufweist, die die Stromversorgung der Detektionsschaltung für den Druck auf der Grundlage eines Detektionssignals des piezoelektrischen Körpers umschaltet.

2. Der Drucksensor nach Anspruch 1, wobei
die Widerstände, die in der Detektionsschaltung für den Druck enthalten sind, aufweisen:
einen ersten und einen dritten Widerstand, die an einer ersten Dehnungsposition (24) angeordnet sind und eine vorbestimmte Dehnungscharakteristik an der Membran erzeugen; und
einen zweiten und einen vierten Widerstand, die an einer zweiten Dehnungsposition (26) angeordnet sind und eine Dehnungscharakteristik in einer anderen Richtung als die erste Dehnungscharakteristik erzeugen,
wobei sich die erste Dehnungsposition auf einer äußeren Umfangsseite der zweiten Dehnungsposition auf der Membran befindet, und
der piezoelektrische Körper einen ersten piezoelektrischen Abschnitt (35a, 135a) aufweist, der in einem dritten Dehnungsbereich (27) angeordnet ist, der eine Dehnung in der gleichen Richtung wie die erste Dehnungsposition auf der Membran erzeugt.

3. Der Drucksensor nach Anspruch 2, wobei
der piezoelektrische Körper eine Mehrzahl von ersten piezoelektrischen Abschnitten (235a, 335a) umfasst, und
die Umschalteinheit die Stromversorgung der Detektionsschaltung für den Druck auf der Grundlage eines Signals umschaltet, das durch Summierung der Detektionssignale der Mehrzahl der ersten piezoelektrischen Abschnitten erhalten wird.

4. Der Drucksensor nach Anspruch 2, wobei
der piezoelektrische Körper einen zweiten piezoelektrischen Abschnitt (335b) aufweist, der in einem vierten Dehnungsbereich (28) angeordnet ist, der eine Dehnung in der gleichen Richtung wie die zweite Dehnungsposition auf der Membran erzeugt, und
die Umschalteinheit die Stromversorgung der Detektionsschaltung für den Druck auf der Grundlage eines Differenzsignals zwischen einem Detektionssignal von dem ersten piezoelektrischen Abschnitt und einem Detektionssignal von dem zweiten piezoelektrischen Abschnitt schaltet.

5. Drucksensor nach einem der Ansprüche 1 bis 4, wobei der piezoelektrische Körper einen piezoelektrischen Dünnschichtkörper aus einer dünnen Schicht umfasst.

6. Drucksensor nach einem der Ansprüche 2 bis 4, umfassend:
eine Seitenwand (29), die mit einer Außenkante der Membran verbunden ist; und
einen Ausrundungsabschnitt (730), der zwischen einem vorbestimmten Bereich der Innenseite der Außenkante der Membran und der Seitenwand verläuft und von der Seitenwand zur Mitte der Membran hin allmählich dünner wird.

## Revendications

1. Capteur de pression (10) comprenant :
une membrane (22) générant une déformation en réponse à une pression ;
un circuit de détection de pression (32) comportant au moins quatre résistances (R1 à R4) disposées sur la membrane et détectant la déformation de la membrane à l'aide d'un circuit en pont formé par les résistances ;
le capteur de pression caractérisé en qu'il comprend :
un corps piézoélectrique (35) disposé sur la membrane et détectant la déformation de la membrane ; et
une unité de commutation (72) commutant l'alimentation électrique du circuit de détection de pression sur la base d'un signal de détection provenant du corps piézoélectrique.

2. Capteur de pression selon la revendication 1, dans lequel
les résistances incluses dans le circuit de détection de pression comprennent :
des première et troisième résistances disposées au niveau d'une première position de contrainte (24) générant une caractéristique de contrainte prédéterminée sur la membrane ; et
des deuxième et quatrième résistances disposées au niveau d'une seconde position de contrainte (26) générant une caractéristique de contrainte dans une direction différente de la première position de contrainte,
la première position de contrainte est située sur un côté circonférentiel externe de la seconde position de contrainte sur la membrane, et
le corps piézoélectrique comprend une première partie piézoélectrique (35a, 135a) disposée dans une troisième région de contrainte (27) générant une contrainte dans la même direction que la première position de contrainte sur la membrane.

3. Capteur de pression selon la revendication 2, dans lequel
le corps piézoélectrique comprend une pluralité de premières parties piézoélectriques (235a, 335a), et
l'unité de commutation commute l'alimentation électrique du circuit de détection de pression sur la base d'un signal obtenu par sommation de signaux de détection provenant de la pluralité de premières parties piézoélectriques.

4. Capteur de pression selon la revendication 2, dans lequel
le corps piézoélectrique comprend une seconde partie piézoélectrique (335b) disposée dans une quatrième région de contrainte (28) générant une contrainte dans la même direction que la seconde position de contrainte sur la membrane, et
l'unité de commutation commute l'alimentation électrique du circuit de détection de pression sur la base d'un signal de différence entre un signal de détection provenant de la première partie piézoélectrique et un signal de détection provenant de la seconde partie piézoélectrique.

5. Capteur de pression selon l'une quelconque des revendications 1 à 4, dans lequel le corps piézoélectrique comprend un corps piézoélectrique en couche mince composé d'une couche mince.

6. Capteur de pression selon l'une quelconque des revendications 2 à 4, comprenant :
une paroi latérale (29) reliée à un bord externe de la membrane ; et
une partie flanc de raccordement (730) reliant une plage prédéterminée de l'intérieur du bord externe de la membrane et la paroi latérale et s'amincissant progressivement depuis la paroi latérale jusqu'au centre de la membrane.
